(19) Europäisches Patentamt
European Patent Office
Office européen des brevets

(11) Veröffentlichungsnummer: **0 668 299 A2**

# (12) EUROPÄISCHE PATENTANMELDUNG

(21) Anmeldenummer: **95101471.1**

(22) Anmeldetag: **03.02.95**

(51) Int. Cl.6: **C08F 230/08**, C08F 246/00, C09D 143/04, C09J 143/04

(30) Priorität: **10.02.94 DE 4404188**

(43) Veröffentlichungstag der Anmeldung: **23.08.95 Patentblatt 95/34**

(84) Benannte Vertragsstaaten: **DE ES FR GB IT NL**

(71) Anmelder: **BASF Aktiengesellschaft**
**Carl-Bosch-Strasse 38**
**D-67063 Ludwigshafen (DE)**

(72) Erfinder: **Mathauer, Klemens, Dr.**
**Hornstrasse 10**
**D-67061 Ludwigshafen (DE)**
Erfinder: **Dittrich, Uwe, Dr.**
**Am Laibach 6**
**D-33790 Halle (DE)**
Erfinder: **Endisch, Stefan**
**Lagerstrasse 29**
**D-64560 Riedstadt (DE)**
Erfinder: **Glöckner, Martin**
**Freundchenstrasse 23**
**D-67269 Grünstadt (DE)**
Erfinder: **Bechert, Bertold**
**Trifelstrasse 66**
**D-67269 Grünstadt (DE)**

## (54) Copolymerisate, enthaltend Vinylsilane und gesättigte, als Regler reagierende Siliciumverbindungen.

(57) Radikalisches Copolymerisat, im wesentlichen aufgebaut aus

a) 30 bis 99,99 Gew.-% Hauptmonomere ausgewählt aus $C_1$-$C_{20}$-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden und aliphatischen Kohlenwasserstoffen mit 2 bis 8 C-Atomen und 1 oder 2 Doppelbindungen,

b) 0,01 bis 5 Gew.-% eines Gemischs von hydrolisierbaren Siliciumverbindungen aus

$b_1$) ethylenisch ungesättigten, copolymerisierbaren Siliciumverbindungen und

$b_2$) ethylenisch gesättigten Siliciumverbindungen, welche als Regler bei der Copolymerisation an das Polymergerüst gebunden werden,

im Gewichtsverhältnis $b_1$:$b_2$ von 0,01:1 bis 1:0,01 und

c) 0 bis 69,99 Gew.-% von a) und b) verschiedenen Monomeren, wobei sich die Gewichtsangaben auf das Copolymerisat beziehen und sich zu 100 Gew.-% addieren.

EP 0 668 299 A2

Die Erfindung betrifft ein radikalisches Copolymerisat, im wesentlichen aufgebaut aus

a) 30 bis 99,99 Gew.-% Hauptmonomere ausgewählt aus

$C_1$-$C_{20}$-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden und aliphatischen Kohlenwasserstoffen mit 2 bis 8 C-Atomen und 1 oder 2 Doppelbindungen,

b) 0,01 bis 5 Gew.-% eines Gemischs von hydrolisierbaren Siliciumverbindungen aus

$b_1$) ethylenisch ungesättigten, copolymerisierbaren Siliciumverbindungen und

$b_2$) ethylenisch gesättigten Siliciumverbindungen, welche als Regler bei der Copolymerisation an das Polymergerüst gebunden werden,

im Gewichtsverhältnis $b_1$:$b_2$ von 0,01:1 bis 1:0,01 und

c) 0 bis 69,99 Gew.-% von a) und b) verschiedenen Monomeren,

wobei sich die Gewichtsangaben auf das Copolymerisat beziehen und sich zu 100 Gew.-% addieren.

Aus der EP-B-35 332 sind Fliesenkleber bekannt, welche als Polymerbestandteil Copolymerisate von Acrylverbindungen, vinylaromatischen Verbindungen und ungesättigten Siliciumverbindungen enthalten. In der EP-A-366 969 werden Dichtungsmassen und Klebstoffe für keramische Fliesen beschrieben, welche zu 3 bis 30 Gew.-% aus einem Polymeren mit einem Gehalt von Mercaptosilanen bestehen.

Für viele Anwendungen müssen hergestellte Verklebungen bzw. Abdichtungen und Beschichtungen möglichst wasserfest sein. Auch bei ständiger Einwirkung z.B. von Luftfeuchtigkeit oder Spritzwasser sollte die Festigkeit, insbesondere die Scherfestigkeit als Maß für die Kohäsion, nur wenig abnehmen.

Dichtungsmassen oder Klebstoffe für keramische Fliesen enthalten im allgemeinen große Mengen an Füllstoffen, z.B. Calziumcarbonat.

Copolymerisate, welche in Klebstoffen oder Beschichtungs- und Dichtungsmassen mit hohem Füllstoffgehalt Verwendung finden, sollen daher auch in Kombination mit großen Füllstoffmengen Verklebungen, Abdichtungen und Beschichtungen mit hoher Wasserfestigkeit ergeben.

Mit bisher bekannten Copolymerisaten wird noch keine völlig befriedigende Wasserfestigkeit erreicht.

Aufgabe der vorliegenden Erfindung waren daher Copolymerisate, welche sich für möglichst wasserfeste Klebstoffe, Dichtungs- und Beschichtungsmassen eignen.

Demgemäß wurden die eingangs definierten Copolymerisate gefunden.

Die erfindungsgemäßen Copolymerisate enthalten 30 bis 99,99, bevorzugt 70 bis 99,9 und besonders bevorzugt 90 bis 99,7 Gew.-%, bezogen auf das Copolymerisat, sogenannte Hauptmonomere a) ausgewählt aus $C_1$-$C_{20}$-Alkyl(meth)acrylaten, Vinylestern, von bis zu 20 C-Atome enthaltenden Carbonsäuren, Vinylaromaten mit bis zu 20 C-Atomen, ethylenisch ungesättigten Nitrilen, Vinylhalogeniden und aliphatischen Kohlenwasserstoffen mit 2 bis 8 C-Atomen und 1 oder 2 Doppelbindungen.

Als Hauptmonomere zu nennen sind z.B. (Meth)acrylsäurealkylester mit einem $C_1$-$C_{10}$-Alkylrest, wie Methylmethacrylat, Methylacrylat, n-Butylacrylat, Ethylacrylat und 2-Ethylhexylacrylat.

Insbesondere sind auch Mischungen der (Meth)acrylsäurealkylester geeignet.

Vinylester von Carbonsäuren mit 1 bis 20 C-Atomen sind z.B. Vinyllaurat, -stearat, Vinylpropionat und Vinylacetat.

Als vinylaromatische Verbindungen kommen Vinyltoluol, $\alpha$- und p-Methylstyrol, $\alpha$-Butylstyrol, 4-n-Butylstyrol, 4-n-Decylstyrol und vorzugsweise Styrol in Betracht.

Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als nicht aromatische Kohlenwasserstoffe mit 2 bis 8 C-Atomen und ein oder zwei olefinischen Doppelbindungen seien Butadien, Isopren, und Chloropren, sowie Ethylen, Propylen und Isobutylen genannt.

Die Hauptmonomeren werden auch vorzugsweise im Gemisch eingesetzt.

Vinylaromatische Verbindungen wie Styrol werden z.B. häufig im Gemisch mit $C_1$-$C_{20}$-Alkyl(meth)-acrylaten, insbesondere mit $C_1$-$C_8$-Alkyl(meth)acrylaten, oder nicht aromatischen Kohlenwasserstoffen wie Isopren oder vorzugsweise Butadien eingesetzt.

Das Copolymerisat enthält weiterhin 0,01 bis 5 Gew.-%, vorzugsweise 0,1 bis 3 Gew.-%, besonders bevorzugt 0,3 bis 2 Gew.-%, bezogen auf das Copolymerisat, eines Gemischs von hydrolysierbaren Siliciumverbindungen aus

$b_1$) ethylenisch ungesättigten, copolymerisierbaren Siliciumverbindung und

$b_2$) ethylenisch gesättigten Siliciumverbindungen, welche als Regler bei der Copolymerisation an das Polymergerüst gebunden werden,

im Gewichtsverhältnis $b_1$:$b_2$ von 0,01:1 bis 1:0,01.

Vorzugsweise beträgt das Verhältnis 0,01:1 bis 1:1, ganz besonders bevorzugt 0,02:1 bis 0,4:1.

Vorzugsweise handelt es sich bei den Siliciumverbindungen $b_1$) um solche der Formel

$R^3\text{-}SiR^1_n\text{-}(OR^2)_{3-n}$ I

und bei den Siliciumverbindungen $b_2$) um solche der Formel

$X\text{-}R^4\text{-}SiR^1_n\text{-}(OR^2)_{3-n}$ II,

worin $R^1$ für einen $C_1$-$C_8$-Alkylrest, $R^2$ für einen $C_1$-$C_8$-Alkyl- oder einen $C_2$-$C_8$-Acylrest, welche durch ein oder zwei weitere $C_1$-$C_4$-Alkoxygruppen substituiert sein können, $R^3$ für einen Rest mit 2 bis 8 C-Atomen und einer ethylenisch ungesättigten Gruppe, $R^4$ für einen $C_1$-$C_{14}$-Alkylenrest, und X für eine Mercaptogruppe steht und n = 0, 1 oder 2 ist.

Die Reste $R^1$ bis $R^4$ in Formeln I und II haben vorzugsweise folgende Bedeutung:

$R^1$: eine $C_1$-$C_4$-Alkylgruppe $R^2$: eine $C_1$-$C_4$-Alkylgruppe
$R^3$: eine Vinylgruppe, Allylgruppe oder insbesondere eine (Meth)acryloxy-$C_1$-$C_4$-alkylgruppe
$R^4$: eine n-Mercapto-$C_1$-$C_4$-alkylgruppe.

Genannt seien z.B.
3-Acryloxypropyltriethoxysilan
3-Methacryloxypropylmethyldiethoxysilan
3-Methacryloxypropyldimethylethoxysilan
3-Methacryloxypropyltris-(2-methoxyethoxy)silan
3-Mercaptpropyltrimethoxysilan
3-Mercaptopropyltriethoxysilan
3-Methacryloxypropyl-trimethoxysilan.
Vinyltrimethoxysilan
Vinyltris(methoxyethoxy)silan

Weiterhin kann das Copolymerisat noch von a) und b) verschiedene Monomere c) enthalten. Diese sind in Mengen von 0 bis 69,99, vorzugsweise 0 bis 29,9 und besonders bevorzugt 0 bis 9,7 Gew.-%, bezogen auf das Copolymerisat, enthalten.

Als solche zu nennen sind z.B. Ester der Acryl- und Methacrylsäure von Alkoholen mit 1 bis 20 C-Atomen, die außer dem Sauerstoffatom in der Alkoholgruppe mindestens ein weiteres Heteroatom enthalten und/oder die einen aliphatischen oder aromatischen Ring enthalten, wie 2-Ethoxyethylacrylat, 2-Butoxyethyl-(meth)acrylat, Dimethylaminoethyl(meth)acrylat, Diethylaminoethyl(meth)acrylat, (Meth)acrylsäurearyl-, -alkaryl- oder Cycloalkylester, wie Cyclohexyl(meth)acrylat, Phenylethyl-(meth)acrylat, Phenylpropyl(meth)-acrylat oder Acrylsäureester von heterocyclischen Alkoholen wie Furfuryl(meth)acrylat genannt.

Darüber hinaus kommen noch Monomere mit Amino- oder Amidgruppen wie (Meth)acrylamid, sowie deren am Stickstoff mit $C_1$-$C_4$-Alkyl substituierten Derivate, in Betracht.

Von Bedeutung sind insbesondere hydroxyfunktionelle Monomere, z.B. (Meth)acrylsäure-$C_1$-$C_{15}$-alkylester, welche durch ein oder zwei Hydroxygruppen substituiert sind. Insbesondere von Bedeutung als hydroxyfunktionelle Comonomere sind (Meth)acrylsäure-$C_2$-$C_8$-hydroxyalkylester, wie n-Hydroxyethyl-, n-Hydroxypropyl- oder n-Hydroxybutyl(meth)acrylat.

Häufig empfiehlt sich die Mitverwendung von Monomeren mit Carbonsäure- oder Carbonsäureanhydridgruppen, z.B. Acrylsäure, Methacrylsäure, Itaconsäure, Maleinsäure- oder Fumarsäureanhydrid; diese Monomeren werden vorzugsweise in Mengen von 0 bis 10, besonders bevorzugt von 0,1 bis 3 Gew.-%, bezogen auf das Copolymerisat, eingesetzt.

Die Herstellung des Copolymerisats A) erfolgt durch radikalische Polymerisation. Geeignete Polymerisationsmethoden, wie Substanz-, Lösungs-, Suspensions- oder Emulsionspolymerisation sind dem Fachmann bekannt.

Vorzugsweise wird das Copolymerisat durch Lösungspolymerisation mit anschließender Dispergierung in Wasser oder besonders bevorzugt durch Emulsionspolymerisation hergestellt.

Die Comonomeren können bei der Emulsionspolymerisation wie üblich in Gegenwart eines wasserlöslichen Initiators und eines Emulgators bei vorzugsweise 30 bis 95 °C polymerisiert werden.

Geeignete Initiatoren sind z.B. Natrium-, Kalium- und Ammoniumpersulfat, tert.-Butylhydroperoxide, wasserlösliche Azoverbindungen oder auch Redoxinitiatoren.

Als Emulgatoren dienen z.B. Alkalisalze von längerkettigen Fettsäuren, Alkylsulfate, Alkylsulfonate, alkylierte Arylsulfonate oder alkylierte Biphenylethersulfonate. Des weiteren kommen als Emulgatoren Umsetzungsprodukte von Alkylenoxiden, insbesondere Ethylen- oder Propylenoxid mit Fettalkoholen, -säuren oder Phenol, bzw. Alkylphenolen in Betracht.

Als Emulgatoren in Betracht kommen z.B. auch Verbindungen der allgemeinen Formel I

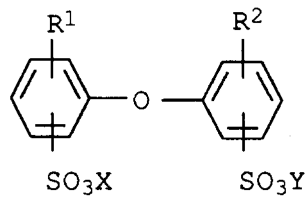

(I),

worin $R^1$ und $R^2$ Wasserstoff oder $C_4$- bis $C_{24}$-Alkyl bedeuten und nicht gleichzeitig Wasserstoff sind, und X und Y Alkalimetallionen oder Ammoniumionen sein können.

In der Formel I bedeuten $R^1$ und $R^2$ bevorzugt lineare oder verzweigte Alkylreste mit 6 bis 18 C-Atomen oder Wasserstoff, und insbesondere mit 6, 12 und 16 C-Atomen, wobei $R^1$ und $R^2$ nicht beide gleichzeitig Wasserstoff sind. X und Y sind bevorzugt Natrium, Kalium oder Ammoniumionen und insbesondere Natrium. Besonders bevorzugt sind Y und Y Natrium, $R^1$ ein verzweigter Alkylrest mit 12 C-Atomen und $R^2$ Wasserstoff oder $R^1$. In der Technik werden häufig Gemische verwendet, die einen Anteil von 50 bis 90 Gew.-% des monoalkylierten Produktes aufweisen, beispielsweise Dowfax® 2A1 (Warenzeichen der Dow Chemical Company).

Diese Verbindungen sind als Emulgatoren allgemein bekannt, beispielsweise aus US-A 4 269 749 der Dow Chemical Company, und im Handel erhältlich.

Im Falle von wäßrigen Sekundärdispersionen wird das Copolymerisat zunächst durch Lösungspolymerisation in einem organischen Lösungsmittel hergestellt und anschließend unter Zugabe von Salzbildnern, z.B. von Ammoniak zu Carbonsäuregruppen enthaltenden Copolymerisaten, in Wasser ohne Verwendung eines Emulgators oder Dispergierhilfsmittels dispergiert. Das organische Lösungsmittel kann abdestilliert werden. Die Herstellung von wäßrigen Sekundärdispersionen ist dem Fachmann bekannt und z.B. in der DE-A-37 20 860 beschrieben.

Zur Einstellung des Molekulargewichts können bei der Polymerisation neben den Siliciumverbindungen $b_2$) weitere Regler eingesetzt werden. Geeignet sind z.B. -SH enthaltende Verbindungen wie Mercaptoethanol, Mercaptopropanol, Thiophenol, Thioglycerin, Thioglykolsäureethylester, Thioglykolsäuremethylester und tert.-Dodecylmercaptan,sie können z.B. in Mengen von 0 bis 0,5 Gew.-%, bezogen auf das Copolymerisat, zusätzlich eingesetzt werden.

Die Art und Menge der Comonomeren wird vorzugsweise so gewählt, daß das erhaltene Copolymerisat eine Glasübergangstemperatur von -60 und +140 °C, vorzugsweise -60 und +100 °C aufweist. Die Glasübergangstemperatur des Copolymerisats wird durch Differentialthermoanalyse oder Differential Scanning Calorimetrie nach ASTM 3418/82, bestimmt.

Das zahlenmittlere Molekulargewicht $M_n$ beträgt vorzugsweise $10^3$ bis $5 \cdot 10^6$, besonders bevorzugt $10^5$ bis $2 \cdot 10^6$ (bestimmt durch Gelpermeationschromatographie mit Polystyrol als Standard).

Die Copolymerisate eignen sich für alle Verwendungen, bei denen eine gute Wasserfestigkeit gewünscht wird. Sie können z.B. als oder in Beschichtungsmassen, Dichtungsmassen oder Klebstoffe Verwendung finden.

Die erfindungsgemäßen Copolymerisate eignen sich zum Beispiel zum Beschichten von mineralischen Materialien, insbesondere Betondachsteinen. Sie verhindern in hervorragender Weise Ausblüherscheinungen und weisen eine erhöhte Wasserfestigkeit auf.

Sie können z.B. auch in Haftklebstoffen, Verpackungs- und Kaschierklebstoffen eingesetzt werden.

Die erfindungsgemäßen Copolymerisate eignen sich in besonderer Weise auch für Beschichtungs-, Dichtungs- oder Klebstoffmassen mit einem hohen Gehalt, z.B. mindestens 20 Gew.-%, vorzugsweise 40 bis 90 Gew.-%, bezogen auf die Beschichtungs-, Dichtungs- oder Klebstoffmasse, an anorganischen Füllstoffen.

Als Füllstoffe werden mit Vorteil Aluminiumsilicate, Quarz, gefällte oder pyrogene Kieselsäure, Leicht- und Schwerspat, Talcum, Dolomit und besonders bevorzugt Calciumcarbonat zugesetzt. Weiterhin kommen als Füllstoffe insbesondere für als Dichtungsmassen zu verwendende Zubereitungen, farbgebende Pigmente in Betracht. Als Weißpigmente werden bevorzugt Titanweiß, Bleiweiß, Zinkweiß, Lithophone und Antimonweiß, als Schwarzpigmente Eisenoxidschwarz, Manganschwarz, Cobaltschwarz, Antimonschwarz und Ruß, als Buntpigmente z.B. Eisenoxidpigmente, Chromgelb, Mennige, Zinkgelb, Zinkgrün, Pinkrot, Cadmiumrot, Cobaltblau, Berliner Blau, Ultramarin, Manganviolett, Cadmiumgelb, Molybdatorange oder Strontiumgelb eingesetzt. Im allgemeinen werden die Füllstoffe in feiner Körnung zugegeben. Die durchschnittliche Korngröße als arithmetisches Mittel der jeweils größten Durchmesser beträgt bevorzugt 0,5 bis 200 µm.

Die Beschichtungs-, Dichtungs- und Klebstoffmassen können weitere Additive, z.B. als äußere Weichmacher geeignete niedermolekulare organische Substanzen enthalten.

Bevorzugt werden als letztere Adipinsäureester wie Di-2-ethylhexyladipat, Di-iso-octyladipat oder Di-isodecyladipat, Phthalsäureester wie Di-n-butylphthalat, Diisoneptylphthalat, Di-iso-octylphthalat oder Di-methylglycolphthalat, Essigsäureester eines Diethylenglycolmonoalkylethers, dessen Alkylgruppe 2 bis 5 C-Atome enthält, Polyisobutene eines zahlenmittleren Molekulargewichtes von 700 bis 1500 sowie oxalkylierte Alkylphenole (Alkylrest: $C_8$ bis $C_{14}$), die durch Addition von 5 bis 10 mol Ethylenoxid und/oder Propylenoxid an 1 mol Alkylphenol erhalten werden, eingesetzt.

Die erfindungsgemäßen Copolymerisate eignen sich in ganz besonderer Weise für Dichtungsmassen und Klebstoffe für keramische Fliesen sowie für Beschichtungsmassen für mineralische Substrate, insbesondere Betondachsteine, vorteilhaft sind insbesondere wäßrige Dispersionen der Copolymerisate, wie sie z.B. bei der Emulsionspolymerisation erhalten werden.

Dichtungsmassen und Klebstoffe für keramische Fliesen enthalten bevorzugt

3 - 30 Gew.-% des erfindungsgemäßen Copolymerisats
40 - 90 Gew.-% anorganische Füllstoffe
0 - 5 Gew.-% Emulgator
0 - 15 Gew.-% äußere Weichmacher und
5 - 40 Gew.-% Wasser.

Besonders bevorzugt enthalten Klebstoffe für keramische Fliesen

3 - 25 Gew.-% des erfindungsgemäßen Copolyzmerisats
50 - 85 Gew.-% anorganische Füllstoffe
0 - 5 Gew.-% Emulgator
0 - 15 Gew.-% äußere Weichmacher und
10 - 30 Gew.-% Wasser.

Besonders bevorzugt enthalten Dichtungsmassen

15 - 30 Gew.-% des erfindungsgemäßen Copolymerisats
40 - 60 Gew.-% anorganische Füllstoffe
0 - 5 Gew.-% Emulgator
0 - 15 Gew.-% äußere Weichmacher und
15 - 25 Gew.-% Wasser.

Beschichtungsmassen für mineralische Untergründe enthalten bevorzugt:

10 - 55 Gew.-% des erfindungsgemäßen Copolymerisats
0 - 70 Gew.-%, vorzugsweise 20 - 60 Gew.-% anorganische Füllstoffe
0 - 5 Gew.-% Emulgator
0 - 15 Gew.-% äußere Weichmacher und
5 - 80 Gew.-% Wasser.

Die Gewichtsprozente beziehen sich jeweils auf die gesamte Masse und addieren sich zu 100 %.

Zur Verwendung in Dichtungsmassen eignen sich vorteilhafter Weise erfindungsgemäße Copolymerisate mit einer Glasübergangstemperatur $T_g$ -60 bis +10 °C, bevorzugt mit einer $T_g$ von -55 bis -5 °C und für eine Verwendung als Klebstoffe für keramische Fliesen eignen sich vorteilhafterweise solche mit einer $T_g$ von -10 bis +40 °, bevorzugt von 0 bis +30 °C.

Zur Verwendung in Beschichtungsmassen für mineralische Substrate bzw. Untergründe, insbesondere Betondachsteinen, eignen sich vorteilhafterweise erfindungsgemäße Copolymerisate mit einer Glasübergangstemperatur $T_g$ von -30 bis +50 °C, bevorzugt von -15 bis +40 °C.

Die $T_g$ wird dabei, wie bereits oben ausgeführt, gemäß ASTM D 3418-82 bestimmt. Der Fachmann kann die $T_g$ des Copolymerisats durch Wahl der Monomeren bestimmen und die sich einstellende $T_g$ vor der Copolymerisation mit Hilfe der Fox-Gleichung (T.G. Fox Bull. Am. Phys. Soc. (ser. II) 1, 123 (1956)) aus den $T_g$-Werten der Homopolymeren der eingesetzten Monomere in sehr guter Näherung abschätzen.

Weitere Hilfsmittel, welche den erfindungsgemäßen Copolymerisaten im Fall der Verwendung als Beschichtungsmasse, Dichtungsmasse oder Klebstoffe, zugesetzt werden können sind z.B. Mittel zur Verbesserung ihrer Haftung wie Dihydrazinverbindungen und Zinktetraminkomplexe, z.B. Zinktetramincarbonat oder Zinktetraminacetat. Verdickungsmittel wie Methylhydroxypropylcellulose, schaumdämpfende Mittel und Konservierungsstoffe wie Fungizide. Insbesondere bei als Dichtungsmassen zu verwendenden Zubereitungen ist es empfehlenswert, den Zubereitungen 0,1 bis 1 Gew.-% Verdickungsmittel, bezogen auf die gesamte Dichtungsmasse, zuzugeben.

Die Herstellung der Beschichtungsmassen, Dichtungsmassen oder Klebstoffe kann zweckmäßigerweise durch Einrühren eines Füllstoffes und gegebenenfalls eines Weichmachers oder weiterer Hilfsmittel in eine 40 bis 70 gew.-%ige wäßrige Dispersion, die das erfindungsgemäße Copolymerisat als disperse Phase

enthält, erfolgen. Um eine homogene Verteilung der Füllstoffe zu gewährleisten, können dabei 0,2 bis 0,6 Gew.-%, bezogen auf die Füllstoffe, an Netz- und Dispergiermitteln zugegeben werden. Mit Vorteil werden als Netz- und Dispergiermittel Ammonium- oder Alkalimetallsalze niedermolekularer Polyacrylsäuren sowie Polyphosphate wie Natriumhexametaphosphosphat eingesetzt.

Beispiele

Herstellung von Copolymerisatdispersionen

4 Gew.-% von Zulauf 1 und 20 Gew.-% von Zulauf 2 wurden in die Vorlage gegeben und 15 Minuten bei 90 °C anpolymerisiert. Zulauf 1 und 2 wurden in 3 Stunden zudosiert und dann wurde 2 Stunden nachpolymerisiert. Mit 25 gew.-%iger Ammoniaklösung wurde ein pH 7 eingestellt.

Vorlage:

385 g Wasser
2,86 g Na-Salz von ethoxyliertem (Ethoxylierungsgrad 25) und sulfatiertem p-Isooctylphenol (35 %ig)

Zulauf 1:

400 g Butylacrylat
470 g Styrol
100 g 2-Ethylhexylacrylat
30 g Acrylsäure
4 g Ammoniak (25 %ig)
54,3 g Na-Salz von ethoxyliertem (Ethoxylierungsgrad 25) und sulfatiertem p-Isooctylphenol (35 %ig)
0,5 g Methacryloxypropyltrimethoxysilan
5 g Mercaptopropyltrimethoxysilan

Zulauf 2:

5 g Natriumperoxodisulfat
200 g Wasser
Die Herstellung der Dispersion D1-D6 erfolgte in entsprechender Weise.

Die Gewichtsanteile an Methacryloxypropyltrimethoxysilan und Mercaptopropyltrimethoxysilan pro 100 g Monomere außer Si-Verbindungen im Polymeren mit sonst gleicher Zusammensetzung gehen aus folgender Tabelle 1 hervor.

Tabelle 1

| | Methacryloxypropyltrimethoxysilan | Mercaptopropyltrimethoxysilan |
|---|---|---|
| D1 | 0 | 0 |
| D2 | 0,05 | 0 |
| D3 | 0,1 | 0 |
| D4 | 0,2 | 0 |
| D5 | 0,05 | 0,5 |
| D6 | 0 | 0,5 |

Anwendungstechnische Prüfung

Mit den Dispersionen wurden nach folgender Rezeptur Fliesenklebstoffe formuliert (Teile sind Gewichtsteile):
100 Teile Wasser

10 Teile hydrophobierte Cellulose
250 Teile Dispersion D1-D6 gemäß Herstellungsbeispiel
5 Teile Copolymer aus Acrylsäure und Acrylamid als Verdicker
10 Teile Ester aus Essigsäure und Diethylenglycolmonobutylether
212 Teile Quarzsand
413 Teile hydrophobierte Kieselsäure
Die Prüfung der Fliesenkleber erfolgte im Scherversuch gemäß British Standard 5980

| | |
|---|---|
| Substrat: | Bisquitfliesen 101 x 101 x 9 mm (Test Piece British Ceramic Research Ass.) |
| verklebte Fläche: | 101 x 88 mm |
| Schichtdicke: | 1 mm |
| Lagerung: | zunächst 7 Tage bei Raumtemperatur und zusätzlich 7 Tage in Wasser |
| Vorschubgeschwindigkeit der Prüfmaschine: | 20 mm/min |
| Auswertung: | mittlere Scherkraft in kN (aus je drei Prüfkörpern) |

Die ermittelten Prüfdaten sind in Tabelle 2 aufgeführt.

Tabelle 2

| Fliesenkleber mit Dispersion | D1 | D2 | D3 | D4 | D5 | D6 |
|---|---|---|---|---|---|---|
| Scherfestigkeit (kN) | 0,1 | 2,2 | 5,2 | 4,9 | 6,5 | 3,2 |

## Patentansprüche

**1.** Radikalisches Copolymerisat, im wesentlichen aufgebaut aus
a) 30 bis 99,99 Gew.-% Hauptmonomere ausgewählt aus
$C_1$-$C_{20}$-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden und aliphatischen Kohlenwasserstoffen mit 2 bis 8 C-Atomen und 1 oder 2 Doppelbindungen,
b) 0,01 bis 5 Gew.-% eines Gemischs von hydrolisierbaren Siliciumverbindungen aus
$b_1$) ethylenisch ungesättigten, copolymerisierbaren Siliciumverbindungen und
$b_2$) ethylenisch gesättigten Siliciumverbindungen, welche als Regler bei der Copolymerisation an das Polymergerüst gebunden werden,
im Gewichtsverhältnis $b_1$:$b_2$ von 0,01:1 bis 1:0,01 und
c) 0 bis 69,99 Gew.-% von a) und b) verschiedenen Monomeren,
wobei sich die Gewichtsangaben auf das Copolymerisat beziehen und sich zu 100 Gew.-% addieren.

**2.** Radikalisches Copolymerisat gemäß Anspruch 1, wobei es sich bei den hydrolisierbaren Siliciumverbindungen $b_1$) um solche der Formel

$$R^3\text{-}SiR^1_n\text{-}(OR^2)_{3-n} \qquad I$$

und bei $b_2$) um solche der Formel

$$X\text{-}R^4\text{-}SiR^1_n\text{-}(OR^2)_{3-n} \qquad II$$

worin $R^1$ für einen $C_1$-$C_8$-Alkylrest, $R^2$ für einen $C_1$-$C_8$-Alkyl- oder einen $C_2$-$C_8$-Acylrest, welche durch ein oder zwei weitere $C_1$-$C_4$-Alkoxygruppen substituiert sein können, $R^3$ für einen Rest mit 2 bis 8 C-Atomen und einer ethylenisch ungesättigten Gruppe, $R^4$ für einen $C_1$-$C_{14}$-Alkylenrest, und X für eine Mercaptogruppe steht und n = 0, 1 oder 2 ist, handelt.

**3.** Radikalisches Copolymerisat gemäß Anspruch 1 oder 2, wobei das Gewichtsverhältnis $b_1$:$b_2$ 0,01:1 bis 1:1 beträgt.

**4.** Radikalisches Copolymerisat gemäß einem der Ansprüche 1 bis 3, wobei die Glasübergangstemperatur $T_g$ des Copolymerisats -60 bis +140 °C beträgt.

5. Radikalisches Copolymerisat gemäß einem der Ansprüche 1 bis 4, wobei das Copolymerisat als wäßrige Dispersion vorliegt.

6. Dichtungsmassen, enthaltend ein Copolymerisat gemäß einem der Ansprüche 1 bis 5.

7. Klebstoffe, enthaltend ein Copolymerisat gemäß einem der Ansprüche 1 bis 5.

8. Beschichtungsmassen, enthaltend ein Copolymerisat gemäß einem der Ansprüche 1 bis 5.

9. Beschichtungs-, Dichtungsmassen oder Klebstoffe, enthaltend ein Copolymerisat gemäß einem der Ansprüche 1 bis 5 und mindestens 20 Gew.-%, bezogen auf die Beschichtungs-, Dichtungsmasse oder Klebstoff, eines Füllstoffs.